# EUROPÄISCHE PATENTSCHRIFT

(11) **EP 2 384 634 B1**
(45) Veröffentlichungstag und Bekanntmachung des Hinweises auf die Patenterteilung: **26.07.2017**
(21) Anmeldenummer: 11165358.0
(22) Anmeldetag: 09.05.2011
(51) Int. Cl.: A22C 11/02, A22C 11/10

(54) **Darmgreifvorrichtung**
Apparatus for gripping sausage casings
Dispositif de prise de boyau

(30) Priorität: 07.05.2010 DE 202010006603 U
(43) Veröffentlichungstag der Anmeldung: 09.11.2011
(73) Patentinhaber: VEMAG Maschinenbau GmbH, 27283 Verden/Aller (DE)
(72) Erfinder: Weller, Frank, 27283 Verden (DE); Grote, Olaf, 27324 Eystrup (DE)
(74) Vertreter: Eisenführ Speiser

(56) Entgegenhaltungen:
- EP-A1- 0 110 343
- DE-A1- 19 627 724
- DE-C- 816 964
- FR-A1- 2 813 760
- US-A- 1 059 411
- US-A- 3 462 794

## Beschreibung

Die Erfindung betrifft eine Darmgreifvorrichtung, insbesondere für geraffte Darmraupen zum Einsatz mit einer Wurstfüllmaschine, enthaltend: zwei relativ zueinander bewegbare Greifelemente, die durch Verkleinern des Zwischenraums zwischen den Greifelementen die Darmraupe greifen und durch Vergrößern des Zwischenraums die Darmraupe freigeben, eine Antriebseinrichtung zum Bewegen mindestens eines der Greifelemente und mindestens ein Hebelelement zum Koppeln des Antriebselement mit mindestens einem Greifelement.
Solche Darmgreifvorrichtungen kommen insbesondere bei Wurst-Füllmaschinen zum Einsatz, um geraffte Därme (Darmraupen) aus einem Magazin auf ein Füllrohr der Füllmaschine aufzubringen.
Aus DE 40 14 410 C2 ist eine Magazinvorrichtung für Wursthüllen mit zwei Zangenhälften zum Greifen einer Würsthülle bekannt. Die Zangenhälften erstrecken sich im Wesentlichen in horizontaler Richtung und sind an Bügeln befestigt. Die Bügel hängen an Schlitten, die entlang zweier Führungen verschiebbar gehaltert sind. Die Schlitten erlauben eine Drehbewegung um Führungswellen, an denen sie gelagert sind, wodurch die Zangenhälften in Querrichtung zur Länge der Wursthüllen und zum Schließen aufeinander zu und zum Öffnen voneinander weg bewegt werden können. Die auf die Wursthülle gerichtete seitlich angeordnete Greiffläche jeder Zangenhälfte besteht aus zwei etwa rechtwinklig angeordneten Hälften, die mit der Wursthülle in tangentialer Berührung gelangen, wenn sich die Zangenhälften schließen. Demnach sind die Zangenhälften nach Art eines Prismas ausgebildet. Unterhalb der Zangenhälften ist ein Auflageelement im Wesentlichen mit der Mittelebene eines Zuführschachtes fluchtend angeordnet. Rückhalteplatten sorgen dafür, dass jeweils nur eine Wursthülle sich im Greifbereich der Zangenhälften befindet. Zur Aufnahme einer Wursthülle werden die Zangenhälften mittels Verdrehung der Schlitten um die Führungswellen nach außen verdreht, so dass sich der Abstand zwischen den Zangenhälften vergrößert. Anschließend wird eine Wursthülle aus dem Zuführschacht auf das Auflageelement fallengelassen. Die Zangenhälften werden in Richtung auf die auf dem Auflageelement liegende Wursthülle verdreht und umschließen die Wursthülle auf ihrer gesamten Länge.

Die Magazinvorrichtung ist aufgrund der Abmessungen des Zuführschachtes und der Zangenhälften stets auf eine bekannte Anzahl von Wursthüllentypen beschränkt. Wursthüllen mit einem größeren Durchmesser als die Breite des Zuführschachtes können deshalb nicht mit dieser Magazinvorrichtung und den Zangenhälften verarbeitet werden. Die Zangenhälften würden zu große Wursthüllen nur ungenügend schonend greifen, so dass die Wursthüllen während der Verarbeitung beschädigt werden. Wursthüllen mit sehr kleinem Durchmesser sind auch nicht mittels dieser Vorrichtung bearbeitbar, weil die Wursthüllen nicht kontrolliert von den Zangenhälften gegriffen werden können.

Aus DE 30 19 981 ist auch eine Magazinvorrichtung für Wursthüllen zum Aufbringen einer Wursthülle auf ein Stopfrohr für eine plastisch verformbare Masse wie Wurst oder Käse bekannt.

Aus DE 10 2008 026 095 A1 ist eine Vorrichtung zum Anbringen einer Umhüllung an einem Füllrohr zur Herstellung von Lebensmittelprodukten, wie z. B. Würsten bekannt. Die Vorrichtung weist ein Paar von hin- und her beweglichen Stangen auf, die mittels eines Antriebsmechanismus angetrieben werden, wie beispielsweise eine herkömmliche Luftdruckzylindereinheit. An gegenüberliegenden Enden ist eine Umhüllungs-Klemmeinrichtung angeordnet, die mittels zweier rechteckig geformter Halteelemente ausgebildet ist. Die Umhüllungs-Klemmeinrichtung bildet im geschlossenen Zustand einen im Wesentlichen viereckigen Raum. Die Stangen, die im Wesentlichen horizontal angeordnet sind, werden auseinandergefahren, um die Wursthülle in den viereckigen Raum zu platzieren, der von den Halteeinrichtungen im geschlossenen Zustand gebildet wird.

DE 30 24 509 offenbart eine Wurstfüllmaschine mit einer Wursthüllengreifvorrichtung, mit vergleichbarem Wirkungsprinzip. Die Erfindung gemäß DE 30 24 509 weist demnach die gleichen Nachteile auf.

Aus DE 30 19 981 ist eine weitere Magazinvorrichtung für Wursthüllen mit einem im Wesentlichen lotrechten Führungschacht bekannt, der zwei Schachtwände aufweist. Der Abstand zwischen den Schachtwänden lässt sich mittels einer Spindel, die mit gegensinnigem Gewinde an den Schaftwänden angreift, symmetrisch zur lotrechten Mittelebene des Führungsschachtes verstellen. Der Führungsschacht wird am unteren Ende von einem leistenförmigen Schachtboden abgeschlossen, der so angeordnet ist, dass eine darauf liegende Wursthülle auf die Mitte des Stopfrohres ausgerichtet ist. Die Vorrichtung nach DE 30 19 981 ist nur mit erhöhtem Aufwand an unterschiedliche Durchmesser der Wursthülle aripassbar. Zum Anpassen der Vorrichtung an die jeweiligen Wursthüllen ist es notwendig, den Führungsschacht von allen Wursthüllen zu entleeren. Ferner lässt sich der Führungsschacht nur manuell verstellen.

DE 43 23 128 T2 offenbart eine Vorrichtung mit einem Vorratsbehälter zum Vereinzeln ünd Aufbringen einer Darmraupe auf ein Füllrohr. Die Vorrichtung weist einen Bandförderer mit einem V-förmigen Querschnitt auf, auf dem die Darmraupen aus dem Vorratsbehälter platziert werden. Anschließend sorgt ein höhenverstellbares Zentrierelement mit einer ebenen Querschnittsfläche dafür, dass die Darmraupe zwischen dem Bandförderer und dem Zentrierleement gehalten werden. Zum Antrieb des Förderbandes und zum weiteren Verfahren der Wursthülle in Richtung des Füllrohres ist die Vorrichtung mit einem zweiten permanentmagneterregten Gleitstrommotor versehen. Zusätzlich dazu weist die Vorrichtung einen eigenen Antrieb zum Verstellen der Höhe des Zentrierelements auf. Die Vielzahl von Antrieben mit Energie- und Steuerungssignalkabeln ist insbesondere im Anwendungsbereich der Lebensmittelindustrie ein Problem aufgrund hygienischer Bedingungen.

Aus US 1 059 411 A ist weiterhin eine Vorrichtung zum Raffen schlauchförmiger Hüllen bekannt, die an einer Aufnahme für die schlauchförmige Hülle anliegende Anpressrollen bzw. Anpresswalzen zum Aufschieben der Hülle auf die Aufnahme aufweisen. Die Anpressrollen bzw. Anpresswalzen sind über schwenkbare Hebelelemente aufgenommen, wobei die Anpressrollen durch Verkleinern des Abstandes zwischen den Rollen mit der schlauchförmigen Hülle in Anlage gebracht werden und durch Vergrößern des Abstandes der Kontakt zur schlauchförmigen Hülle aufgehoben wird.

Aufgabe der Erfindung ist es daher, eine Vorrichtung zum Greifen eines Darms, insbesondere einer gerafften Darmraupe für eine Füllmaschine bereitzustellen, die unabhängig vom Durchmesser der Darmraupe anwendbar ist und auf eine einfache Weise antreibbar und steuerbar ist.

Die Erfindung löst die ihr zugrundeliegende Aufgabe bei einer Darmgreifvorrichtung der eingangs genannten Art mit einem Greifelement, welches beweglich an dem Hebelelement gelagert ist, wobei mindestens ein Hebelelement mit beiden Greifelementen gekoppelt ist.

Mittels der beweglichen Lagerung des Greifelements an dem Hebelelement ist eine Relativbewegung der Greifelemente zueinander realisierbar, die besonders schonend für unterschiedliche Darmraupengrößen ohne zusätzliche Einstellvorgänge einsetzbar ist und sich mit einer einfachen Antriebseinrichtung bewegen lässt. Die bewegliche Lagerung des Greifelements an dem Hebelelement ermöglicht eine besonders flexible Anpassbarkeit des Greifelements an die Form und Lager der jeweiligen Darmraupe. Die Greifelemente bilden einen Zwischenraum, der durch die Relativbewegung der Greifelemente zueinander hin und voneinander weg variierbar ist. Durch die Relativbewegung werden die Greifelemente zum Greifen und Freigeben einer Darmraupe geöffnet und geschlossen. Zum Greifen einer Darmraupe wird der Zwischenraum zwischen den Greifelementen soweit verkleinert, bis es im Wesentlichen dem Durchmesser der Darmraupe entspricht. Die daraus resultierende Druckkraft, welche auf die Darmraupe ausgeübt wird, ermöglicht eine sichere Positionierung der Darmraupe zwischen den Greifelementen, ohne dabei die Darmraupe zu verformen oder zu beschädigen. Auch ist eine sehr genauere Positionierung unterschiedlich großer Darmraupen zentrisch vor einem Füllrohr einer Füllmaschine einfach möglich. Vorzugsweise erfolgt dabei die Relativbewegung der Greifelemente durch die Bewegung beider Greifelemente. Jedoch ist eine vorteilhafte erfindungsgemäße Ausführungsform mittels eines unbeweglichen Greifelements und eines anderen beweglichen Greifelements realisierbar. Zum Bewegen mindestens eines der Greifelemente ist eine Antriebseinrichtung vorgesehen, die ihre Bewegungskraft mittels des Hebelelements auf das jeweilige Greifelement überträgt. Die Antriebseinrichtung kann dadurch an einer Stelle positioniert werden, die von den Greifelementen beabstandet ist, um eine Beeinflussung der sich zwischen den Greifelementen befindenden Darmraupe durch die Antriebseinrichtung zu verhindern.

Die erfindungsgemäße Darmgreifvorrichtung weist ein Hebelelement auf, das mit beiden Greifelementen gekoppelt ist. Mittels dieser Ausführungsform wird auf besonders einfache Weise die Relativbewegung der Greifelemente zueinander und Zentrierung der Darmraupe vor dem Füllrohr erreicht. Zum Bewegen beider Greifelemente ist daher nur eine Antriebseinrichtung notwendig, die mit dem Hebelelement gekoppelt ist, die wiederrum die Bewegungskraft der Antriebseinrichtung auf beide Greifelemente überträgt.

Vorteilhaft ist weiterhin eine erfindungsgemäße Ausführungsform mit Greifelementen, die drehbar an dem mindestens einen Hebelelement gelagert sind. Mittels dieser Ausführungsform wird eine Anordnung der Greifelemente relativ zu dem mindestens einen Hebelelement ermöglicht, die sich besonders zum schonenden Greifen einer Darmraupe eignet. Unabhängig von der jeweiligen Stellung des Hebelelements können die Greifelemente so relativ zu dem Hebelelement verdreht werden, die zum schonenden Greifen der Darmraupe günstig ist.

Bevorzugt ist auch eine erfindungsgemäße Ausführungsform mit zwei Hebelelementen, die parallel zueinander angeordnet und in einer Ebene parallel zu den Hebelelementen auf gleicher Höhe gelagert sind. Mittels dieser Anordnung der zwei Hebelelemente erreicht man eine besonders günstige Anordnung und Relativbewegung der Greifelemente zueinander und voneinander weg hinsichtlich der Einstellbarkeit der Greifkraft auf die Darmraupen. Die Greifelemente befinden sich in einer Ebene, welche parallel zu der Ebene der Hebelelemente versetzt ist. In dieser Ebene ist jedes Greifelement an beiden Hebelelementen drehbar gelagert und zwar so, dass sie parallel zueinander ausgerichtet sind. Die Lagerpunkte befinden sich im Wesentlichen an den Enden der Hebelelemente. Die parallele Ausrichtung der Greifelemente zueinander wird in jeder Position aufrechterhalten, die zum Greifen der Darmraupen besonders vorteilhaft sind. Die Druckkraft auf die Darmraupe ist über den gesamten Durchmesserbereich im Wesentlichen konstant.

Vorteilhaft ist weiterhin eine erfindungsgemäße Ausführungsform mit Hebelelementen, die mittels Antriebswellen an einem Gestell drehbar gelagert sind. Mittels dieser Ausführungsform wird eine Momentübertragung auf die Hebelelemente erreicht, die eine besonders vorteilhafte Relativbewegung der Greifelemente zueinander erlaubt. Die Antriebswellen sind derweil im Wesentlichen mittig im Hebelelement gelagert und ermöglichen eine auf beide Greifelemente gleichmäßig verteilte Übertragung des Drehmoments, dessen Lagerungspunkte vorzugsweise den gleichen Abstand zur Antriebswelle aufweisen. Die Verkleinerung und Vergrößerung des Zwischenraums zwischen den Greifelementen vollzieht sich durch eine Rotation der Greifelemente im jeweils entgegengesetzten Richtungen, wobei die parallele Ausrichtung der Greifelemente zueinander konstant bleibt.

Ferner ist eine erfindungsgemäße Ausführungsform bevorzugt, bei der die Antriebseinrichtung zwei Enden aufweist, welche jeweils mittels eines Kopplungsstücks an einer der Antriebswellen beabstandet von deren Längsachse drehbar gekoppelt ist. Auf diese Weise wird eine besonders gleichmäßige Verteilung des Drehmoments auf die Greifelemente erreicht, wodurch die reibungslose Bewegung der Greifelemente sichergestellt wird. Das Kopplungsstück weist beispielsweise eine rechteckige Grundform auf, wobei in einer Hälfte des Kopplungsstücks die Antriebswelle gelagert ist und in der anderen Hälfte des Kopplungsstücks jeweils ein Ende der Antriebseinrichtung drehbar gekoppelt ist. Die Kopplung zwischen dem Kopplungsstück und der Antriebswelle ist kraft- oder formschlüssig ausgebildet, so dass ein Moment vom Kopplungsstück auf die Antriebswelle übertragbar ist. Der Abstand zwischen den beiden Kopplungspunkten bietet einen Drehmomenthebel für Kräfte, die an dem Kopplungspunkt der Antriebseinrichtung angreifen. Durch einen geschlossenen Kraftschluss über eine Antriebswelle, Hebelelement, Greifelemente, das andere Hebelelement, die andere Antriebswelle und das Kopplungsstück zurück zur Antriebseinrichtung ergibt sich stets eine gleichmäßige Momentenübertragung auf beide Greifelemente.

Gemäß einer bevorzugten Weiterbildung der Erfindung weist die Antriebseinrichtung der Darmgreifvorrichtung einen Energiespeicher auf. Auf diese Weise ist die Vorrichtung mittels einer Antriebseinrichtung betreibbar, die keine externen Anschlüsse zur Energiezufuhr benötigt. Somit sind sämtliche Kabelanschlüsse oder derartige Verbindungselemente überflüssig und steigern damit die Hygiene in dem Moment. Ferner kann mittels des Energiespeichers die Darmgreifvorrichtung energiesparsam betrieben werden.

Besonders vorteilhaft ist eine erfindungsgemäße Ausführungsform, dessen Energiespeicher aus einem Federelement besteht. Auf diese Weise erreicht man einen besonders kompakten Aufbau der Antriebseinrichtung mit einem Energiespeicher. Das Federelement speichert die Verformungsenergie in einer Phase des Antriebsvorgangs, um sie wieder in einer anderen Phase des Antriebsvorgangs an die Greifelemente abzugeben. Das Federelement ist vorzugsweise zwischen den Enden der Antriebseinrichtung eingespannt und von einer Hülse umgeben, so dass Schmutz, Fett oder dergleichen nicht von der Feder an die Umgebung abgegeben werden.

Weiterhin ist eine erfindungsgemäße Ausführungsform bevorzugt, bei der die Greifelemente mittels jeweils eines aus der Federkraft des Federelements resultierenden auf die Antriebswellen wirkenden Drehmoments angetrieben werden. Mittels dieser Ausführungsform wird eine besonders konstante und gleichmäßige Greifkraft erreicht. Der Drehmoment-freie Zustand (Totpunkt) der Antriebswellen definiert die Grenze zwischen der den Zwischenraum der Greifelemente vergrößernden und verkleinernden Relativbewegung der Greifbacken. In dieser koaxialen Anordnung der Längsachsen der Kopplungsstücke und des Antriebselements ist die Antriebswelle im Wesentlichen drehmomentenfrei.

In der nicht-koaxialen Anordnung der Längsachsen der Kopplungsstücke und des Antriebselements bewirken die aus der Federkraft des Federelements resultierenden Drehmomente auf die Antriebswellen die Bewegung der Greifelemente.

In einer weiteren Ausführungsform weist die Darmgreifvorrichtung ferner eine Führungseinrichtung zum Führen der Darmgreifvorrichtung entlang einer Bewegungsbahn auf, wobei mindestens ein Anschlag benachbart zu der Bewegungsbahn angeordnet ist, mittels dessen die Relativbewegung der Greifelemente zur Vergrößerung und Verkleinerung des Zwischenraums zwischen den Gleitelementen auslösbar ist.

Die Relativbewegung der Greifelemente zueinander zum Vergrößern und Verkleinern des Zwischenraums kann auf diese Weise sehr einfach und ohne externen Energie - und/oder ohne ein Steuerungssignal realisiert werden. Beim Verfahren der Darmgreifvorrichtung entlang einer Bewegungsbahn bewirkt mindestens ein Anschlag, dass die Greifelemente entweder aufeinander zu oder voneinander weg bewegt werden. Vorzugsweise ist die Bewegungsbahn linear.

Besonders bevorzugt ist eine erfindungsgemäße Ausführungsform, bei der die Hebelelemente mittels Antriebswellen an einem Gestell drehbar gelagert sind und das Gestell mit einer zweiten Antriebseinrichtung verbunden ist, mittels dessen die Darmgreifvorrichtung entlang der Bewegungsbahn verfahrbar ist. Mittels dieser Ausführungsform wird erreicht, dass die Darmgreifvorrichtung zum Auslösen der Relativbewegung der Greifelemente an dem Anschlag vorbei verfahren wird. Ferner erlaubt diese Ausführungsform den Transport der Darmraupe, die von einem Magazin zwischen die Greifelemente Aufgenommen wird, auf ein beabstandet von dem Magazin angeordnetes Füllrohr.

Mittels der vorteilhaften und erfindungsgemäßen Ausführungsform bei der die Darmgreifvorrichtung um eine zur Bewegungsbahn parallele Achse verschwenkbar gelagert ist, erreicht man eine besonders kompakte Anordnung der Darmgreifvorrichtung relativ zu einem Magazin, in dem die Darmraupen bevorratet sind, und dem Füllrohr, mittels dessen die Darmraupen mit Wurstbrät befüllt werden.

Vorteilhaft ist eine erfindungsgemäße Ausführungsform, bei der eines der Hebelelemente ein mit einem ersten Anschlag in Kontakt bringbares Betätigungselement aufweist, welches beim Verfahren der Darmgreifvorrichtung von dem ersten Anschlag betätigt wird, so dass sich die Greifelemente auseinander bewegen und der Zwischenraums zwischen den Greifelementen vergrößert wird.

Eine weitere vorteilhafte erfindungsgemäße Ausführungsform ist dadurch gekennzeichnet, dass ein Abschnitt eines der Greifelemente beim Verfahren der Darmgreifvorrichtung mit einem zweiten Anschlag zusammenwirkt, so dass die Greifelemente sich zueinander bewegen und der Zwischenraum zwischen den Greifelementen verkleinert wird. Besondern vorteilhaft ist eine erfindungsgemäße Ausführungsform dessen Betätigungselement an einem an dem Hebelelement befestigten Arm angeordnet ist, welcher in Richtung der Antriebswelle versetzt ist und von einem stoßfestem Material umrandet ist. Diese Ausführungsform erreicht auf besonders einfache Weise das Auslösen der den Zwischenraum zwischen den Greifelementen vergrößernden Relativbewegung. Der Arm bietet einen zusätzlichen Hebel zu Übertragen eines Drehmoments, der durch Zusammenwirken des Anschlages mit dem Betätigungselement beim Vorbeifahren der Darmgreifvorrichtung resultiert. Das stoßfeste, vorzugsweise elastische Material vermindert den Verschleiß auch bei langzeitiger Benutzung der Greifvorrichtung.

Vorteilhaft ist ferner eine erfindungsgemäße Ausführungsform mit einem ersten Anschlag, der nur in einer Verfahrrichtung der Darmgreifvorrichtung mit dem Betätigungselement zusammenwirkt. Die Vergrößerung des Zwischenraums der Greifelemente erfolgt beim Verfahren der Darmgreifvorrichtung auf das Füllohr, wodurch das Füllrohr gleichzeitig mit der Darmraupe überzogen wird. Um die Greifelemente beim Zurückfahren der Darmgreifvorrichtung in der geöffneten Position zu halten, ist es vorteilhaft, dass der erste Anschlag nur in einer Fahrrichtung mit dem Betätigungselement zusammenwirkt. Mittels der weiteren erfindungsgemäßen Ausführungsform mit einem zweiten Anschlag, der aus einem Wandabschnitt besteht, an dem die Darmgreifvorrichtung montiert ist, erreicht man auf eine besonders einfache Weise das Auslösen der Schließbewegung der Greifelemente. Hierzu schlägt das Ende eines Greifelements an dem Wandabschnitt an und erfährt dadurch einen Impuls, der die Schließbewegung der Greifelemente in Gang setzt.

Vorteilhaft ist auch eine erfindungsgemäße Ausführungsform mit einem dritten Anschlag, der an dem Gestell angebracht ist und mit dem zweiten Hebelelement zusammenwirkt, um die Drehbewegung des zweiten Hebelelements so zu begrenzen, dass sich die Greifelemente nur bis zu einem definierten Abstand voneinander auseinander bewegen. Mittels dieser Ausführungsform wird auf einfache Weise erreicht, dass die Drehung des Hebelelements angehalten wird, sobald dieser im Wesentlichen senkrecht zu den Greifelementen steht. Eine weitere Drehung der Hebelelemente über diese vertikale Stellung hinaus würde die Öffnungsbewegung der Greifelemente wieder in eine Schließbewegung der Greifelemente umwandeln. Mittels des dritten Anschlags kann somit sichergestellt werden, dass die Greifelemente in der geöffneten Position verharren.

Eine vorteilhafte erfindungsgemäße Ausführungsform ist dadurch gekennzeichnet, dass die zweite Antriebseinrichtung ein Rollringgetriebe, eine Gewindespindel oder einen Pneumatikzylinder enthält. Mittels dieser Ausführungsform ist eine zweite Antriebseinrichtung zum Verfahren in der gesamten Darmgreifvorrichtung realisierbar, bei der insbesondere Schmutzablagerungen verhindert werden können. Das Rollringgetriebe, die Gewindespindel oder der Pneumatikzylinder wird in Kombination mit einer rotierbaren Führungsstange verwendet.

Ferner ist eine erfindungsgemäße Ausführungsform besonders bevorzugt, bei der die Antriebseinrichtung mit einem Dämpferelement versehen ist. Bevorzugterweise ist die Antriebeinrichtung in Form eines Federbeins ausgebildet. Die Dämpfung der Antriebeinrichtung erlaubt eine gedämpfte Bewegung der Greifelemente insofern, dass der Darm in seiner ursprünglichen Relativposition bezüglich der Greifelemente verharrt. Zusätzlich ist der Impuls beim ersten Kontakt der Greifelemente mit der Darmraupe abgeschwächt, so dass ein besonders schonender Umgang mit dem Darmraupen möglich ist.

Weiterhin ist eine erfindungsgemäße Ausführungsform vorteilhaft, bei der durch die Gestaltung der Innenseiten der Greifelemente zwischen diesen eine prismatische oder prismenähnliche Struktur ausgebildet ist und dass optional die Aussparungen der gegenüberliegenden Seitenflächen der Greifelemente mit einer zusätzlichen Haftschicht versehen sind. Aus dieser Ausführungsform mit einer prismenähnlichen Ausgestaltung zwischen den Greifelementen lassen sich Darmraupen unterschiedlicher Kaliber stets zuverlässig greifen. Es ergibt sich eine besonders vorteilhafte Haltekraft in Richtung der Längsachse des Greifelements. Insbesondere beim Überziehen des Füllrohrs mit einer Darmraupe bewirkt die Haftschicht die zuverlässige Kraftübertragung von den Greifelementen auf die Darmraupe. Somit kann verhindert werden, dass die Darmraupe beim Überziehen auf das Füllrohr in den Greifelementen verrutscht.

Bevorzugt ist eine erfindungsgemäße Ausführungsform mit einer Haftschicht, die mittels einer Vielzahl von dünnen Streifen, vorzugsweise aus Silikon- oder Nitrilkautschuk oder Polyurethan, ausgebildet ist, die quer zur Längsachse über die gesamte Länge des Greifelements angeordnet sind.

Vorteilhaft ist auch eine erfindungsgemäße Ausführungsform, wobei ein erstes Greifelement zum Auffangen einer aus einem Magazin fallenden oder rollenden Darmraupe ausgebildet ist. Mittels dieser Ausführungsform wird die sichere Aufnahme einer Darmraupe aus einem Magazin sichergestellt. Hierzu ist das Greifelement mit mindestens einem erweiterten und angewinkelten Seitenwandabschnitt ausgebildet. Hierzu ist es unter anderem auch vorteilhaft, dass die Länge des Greifelements in etwa dem der Darmraupe entspricht. Auch leicht eingeknickte Darmraupen lassen sick 12a - so zwischen den Greifelementen greifen, dass die Darmraupen problemlos au ein Füllrohr aufschiebbar sind.

Im Folgenden ist ein Ausführungsbeispiel der Erfindung beschrieben. Es zeigen:
- Figur 1 a und 1b:: eine Seitenansicht und eine Draufsicht des Ausführungsbeispiels der Darmgreifvorrichtung in Kombination mit einer Wurst-Füllmaschine;
- Figur 2a-d:: jeweils eine perspektivische Ansicht und eine Seitenansicht der Darmgreifvorrichtung auf einer Führungsschiene in zwei unterschiedlichen Stellungen;
- Figur 3:: eine perspektivische Ansicht einer halb geöffneten Darmgreifvorrichtung;
- Figur 4:: eine perspektivische Ansicht einer vollständig geschlossenen Darmgreifvorrichtung;
- Figur 5:: eine perspektivische Ansicht einer vollständig geöffneten Darmgreifvorrichtung;
- Figuren 6a-d:: vier Sequenzen der Schließbewegung der Darmgreifvorrichtung in einer Seitenansicht;
- Figuren 7a-d:: vier Sequenzen der Öffnungsbewegung der Darmgreifvorrichtung in einer Seitenansicht.

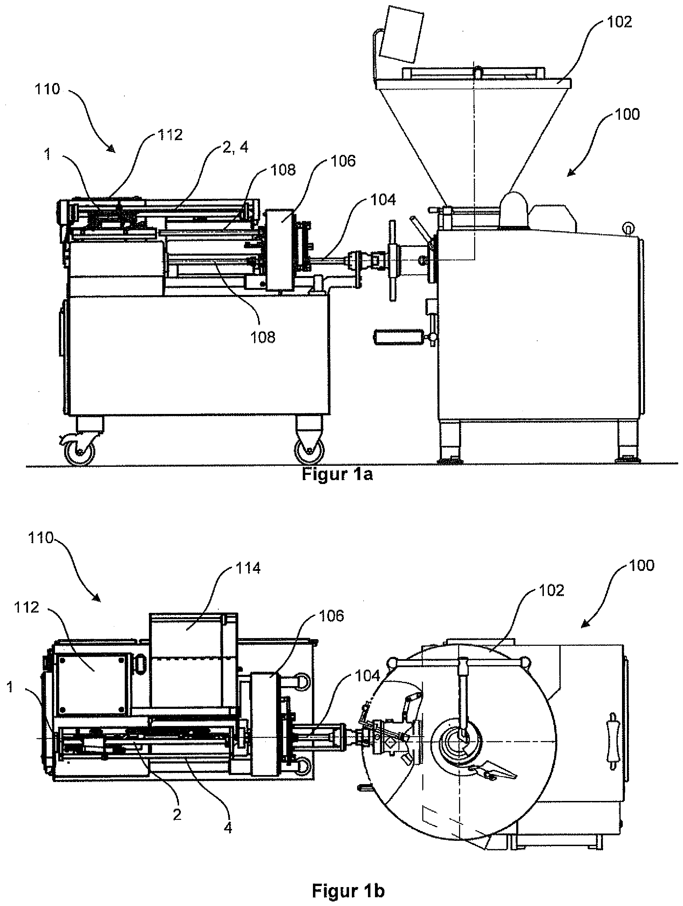

Figur 1a und 1b zeigen eine Wurstfüllmaschine 100 in Verbindung mit einem Vorsatzgerät 110, auf dem die Darmgreifvorrichtung 1 montiert ist. Die Wurstfüllmaschine 100 weist einen Fülltrichter 102 und ein Ausgaberohr auf 104, das mit einem drehbaren Revolvermagazin 106 auf dem Vorsatzgerät 110 verbunden ist. Zwei Füllrohre 108 sind an dem Revolvermagazin 106 horizontal angebracht. Ferner befindet sich eine Antriebseinheit 112 und eine Magazinvorrichtung 114 auf dem Vorsatzgerät 110, die mit einer Vielzahl von Darmraupen bevorratet ist. Auf Höhe der Magazinvorrichtung 114 ist die Darmgreifvorrichtung 1 an zwei Führungsschienen 2, 4 gelagert.

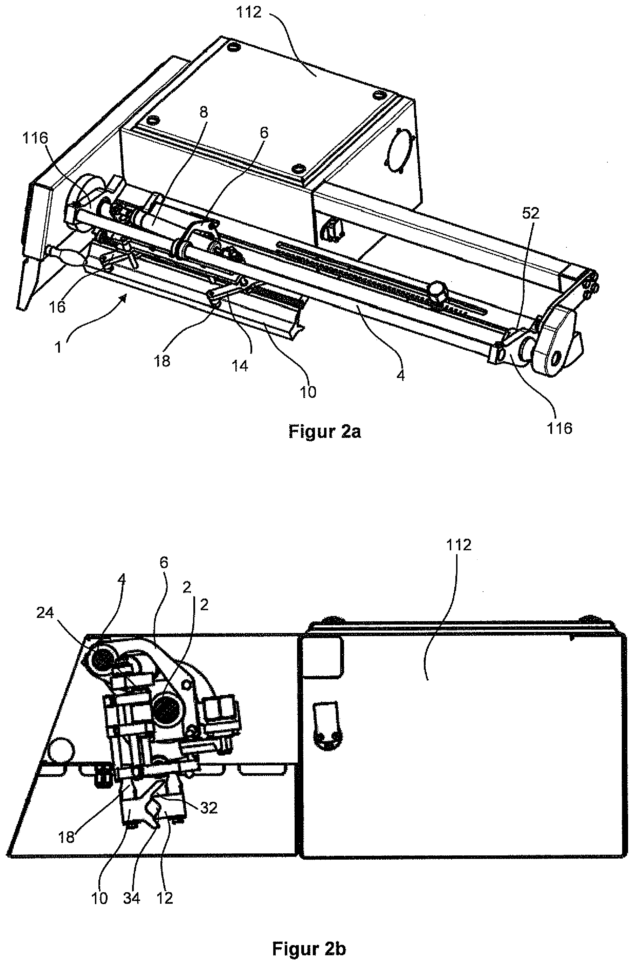

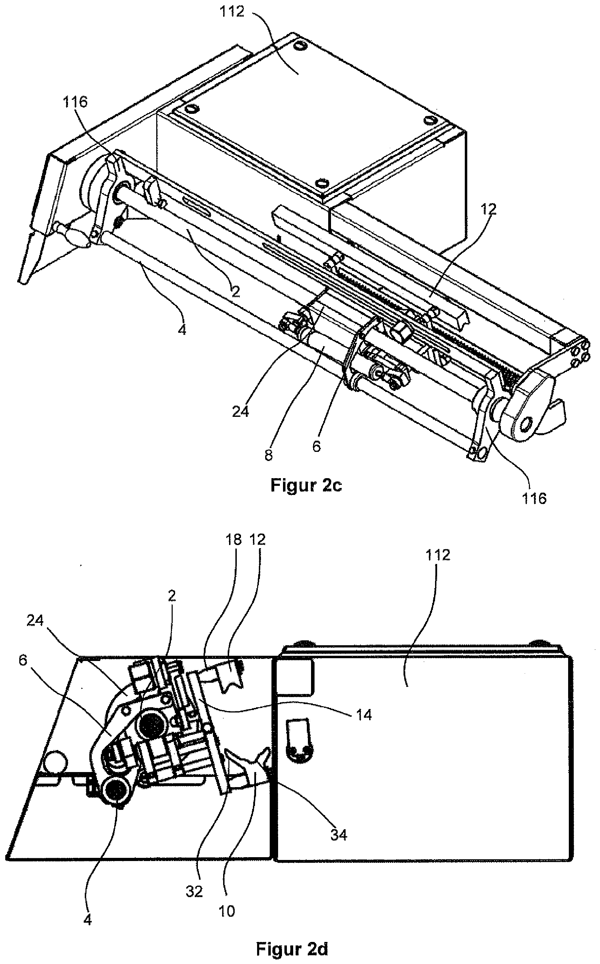

Figur 2 zeigt die Darmgreifvorrichtung 1, die mittels einer Führungsvorrichtung 24 und eines Führungsarms 6 auf zwei parallel zueinander angeordneten Führungsschienen 2, 4 gelagert ist. Die Darmgreifvorrichtung 1 ist um die Führungsschienen 2 herum schwenkbar gelagert. An den Enden der Führungsschienen 2, 4 sind zwei Kopfplatten 116 angebracht, mittels derer die Führungsschienen 2, 4 miteinander verbunden und zusammen drehbar gelagert sind. Zum Drehen der Führungsschienen 2, 4 befindet sich eine Antriebseinheit 112 benachbart zur Magazinvorrichtung 114 und den Führungsschienen 2, 4 der Darmgreifvorrichtung 1. Die Antriebseinheit ist in Figur 2 nur vereinfacht als ein Kasten dargestellt. Die Darmgreifvorrichtung 1 ist in Figur 2c und Fig. 2d mit geöffneten Greifelementen 10, 12 und im eingeschwenkten Zustand gezeigt. Die fiktive Mittelachse des Zwischenraums Z der Greifelemente 10, 12 ist in dieser Position konzentrisch zu dem hier nicht gezeigten Füllrohr 108 ausgerichtet. In einer zweiten Position befindet sich die Darmgreifvorrichtung 1 unmittelbar benachbart zur Magazinvorrichtung 114. In dieser Position ist die Darmgreifvorrichtung 1 so geneigt, dass ein erstes unteres Greifelement 10 näher zur Magazinvorrichtung 114 angeordnet ist, als das zweite obere Greifelement 12.

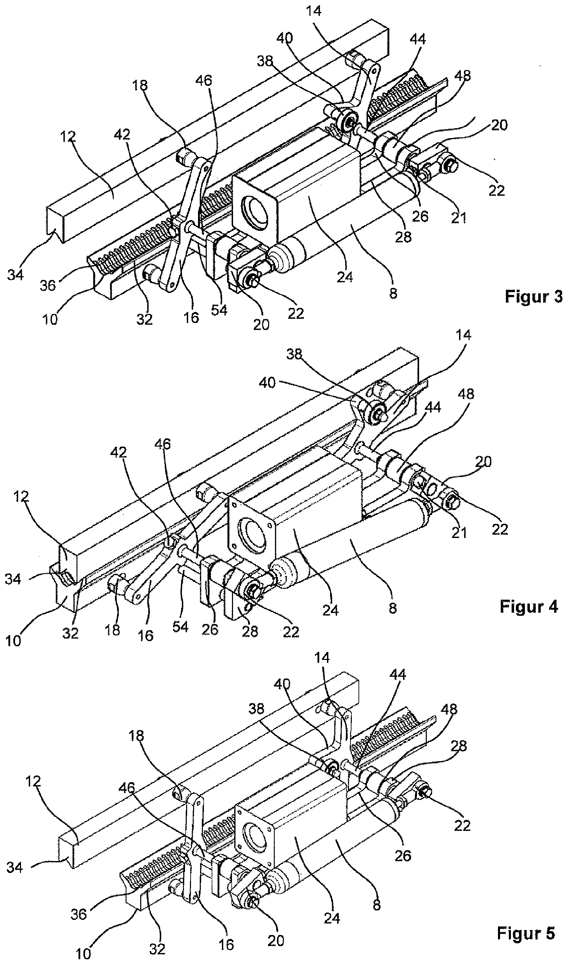

Die Greifelemente 10, 12 der Darmgreifvorrichtung 1 sind entlang ihrer Längsachse parallel zueinander angeordnet, wie in den Figuren 3-5 gezeigt. Sie sind stangenförmig mit einem viereckigen Grundprofil ausgebildet und weisen an ihrer Innenfläche eine Gestaltung auf, so dass zwischen ihnen eine prismatische oder prismenähnliche Strukturentsteht., so dass Darmraupen unterschiedlicher Kaliber zentriert und zuverlässig gegriffen werden können. Die Innenflächen der Greifelemente 10, 12 sind optional mit einer zusätzlichen Haftschicht 36 versehen, die aus einer Vielzahl von quer zur Längsachse über die gesamte Länge des Greifelements angeordneten dünnen Streifen ausgebildet sind. Das erste Greifelement 10 ist zum Auffangen einer aus der Magazinvorrichtung 114 rollenden Darmraupe ausgebildet. Hierzu weist das erste Greifelement 10 zwei angewinkelte Seitenwandabschnitte 32 auf, die den Innenseitenbereich bzw. Auflagebereich der Darmraupe des ersten Greifelements 10 erweitern. Der in Fig. 3 vordere Seitenwandabschnitt 32, der zu den restlichen Elementen der Darmgreifvorrichtung zugewandt ist, ist länger ausgebildet, als der gegenüberliegende in Fig. 3 hintere Seitenwandabschnitt 32. In den Seitenwänden sind die Greifelemente 10, 12 ferner mit jeweils zwei Bohrungen zum Durchführen der Drehlagerung mit den Hebelelementen 8 versehen.

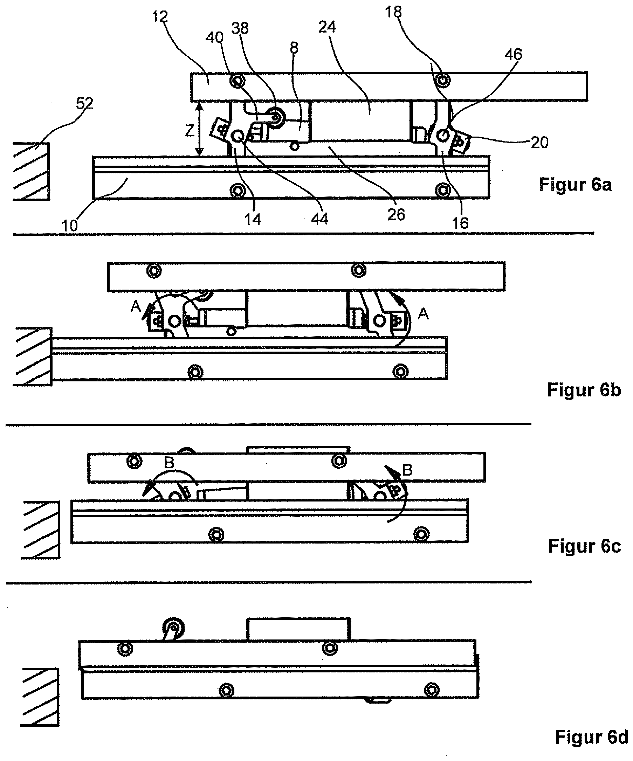

Zwei Hebelelemente 14, 16 sind an Antriebswellen 44, 46 befestigt. In diesem Ausführungsbeispiel sind die Hebelelemente 14, 16 aus Flachstäben hergestellt, sie können auch andere Formen aufweisen. An den Enden der Hebelelemente 14, 16 sind Drehlager 18 angebracht, mittels derer jedes Hebelelement 14, 16 mit beiden Greifelementen 10, 12 drehbar verbunden ist. Von der Mitte des Hebelelements 14, 16 befinden sich die Drehlager 18 symmetrisch zueinander. Die Drehlager 18 sind jeweils durch Schraubenmuttern an der gegenüberliegenden Seitenwand abgesichert. Ein erstes Hebelelement 14 weist einen von der Seite senkrecht abstehenden Arm 40 auf, an dem ein Betätigungselement 38 angeordnet ist. Das Betätigungselement 38 ist in Richtung der Antriebswelle 44, 46 versetzt, in Form einer Rolle ausgebildet und von einem stoßfähigen Material umrandet. Mittig zu den Hebelelementen 14, 16 ist jeweils eine Antriebswelle 44, 46 mit dem Hebelelement verbunden. Die Antriebswelle 44, 46 wird mittels Schrauben 42 mit dem Hebelelement 14, 16 verbunden, so dass ein Drehmoment von der Antriebswelle 44, 46 auf das Hebelelement 14, 16 übertragbar ist. Auf dem Hebelelement 14, 16 sind für die Schrauben 42 Absätze ausgeformt, die eine viereckige Verstärkung des Hebelelements 8 bilden, wie in Figur 6b deutlich zu sehen.

Die Antriebswelle 44, 46 weist über ihre gesamte Länge einen kleinen Durchmesser auf, der nur in etwa in der Mitte der Antriebswelle 44, 46 durch einen Wellenabsatz 48 unterbrochen wird. Zur Lagerung der Antriebswellen 44, 46 ist ein Gestell vorgesehen, das hier in Form von zwei Gestellplatten 26, 28 ausgebildet ist. Sie liegen jeweils an einer Seite des Wellenabsatzes 48 an und sind parallel zu den Greifelementen 10, 12, den Hebelelementen 14, 16 und senkrecht zu den Antriebswellen 44, 46 angeordnet. Ferner ist ein dritter Anschlag 54 in Form einer zylindrische Stange ausgebildet und unterhalb der zweiten Antriebswelle 46 angeordnet, um die Drehbewegung des zweiten Hebelelements 16 so zu begrenzen, dass sich die Greifelemente 10, 12 nur bis zu einem definierten Abstand voneinander auseinander bewegen können. Die Wirkung des dritten Anschlags 54 ist beispielsweise in Figur 5 deutlich zu erkennen. Zur Durchführung der Antriebswellen 44, 46 ist eine Bohrung in den Vorsprüngen 30 vorgesehen. Ein Abschnitt der Antriebswellen erstreckt sich demnach auf der von den Greifelementen 10, 12 gegenüberliegenden Seite aus der zweiten Gestellplatte 28 zur Verbindung mit jeweils einem Kopplungsstück 20.

Die Kopplungsstücke 20 sind in Form eines rechteckigen Blocks ausgebildet und weisen eine Bohrung auf einer Hälfte des Blocks zum Verbinden mit jeweils einer Antriebswelle 44, 46 auf. Zwischen dem Kopplungsstück 20 und der jeweiligen Antriebswelle 44, 46 besteht eine formschlüssige Verbindung mittels einer Schraube, die eine Drehmomentübertragung untereinander ermöglicht. Auf der zweiten Hälfte der Kopplungsstücke 20 befinden sich zwei Bohrungen zur drehbaren Lagerung einer Antriebseinrichtung 8. Durch die Bohrungen ist jeweils eine Schraube zum Verbinden des Kopplungsstücks 20 mit jeweils einem Ende 22 der Antriebseinrichtung 8 durchgeführt. Beide Kopplungsstücke 20 sind auf der Antriebswelle so positioniert, dass die Bohrungen für die Antriebseinrichtung 8 nach außen gerichtet sind. Ferner befinden sich die Kopplungsstücke 20 stets parallel zueinander.

Die Antriebseinrichtung 8 ist in Form eines Federbeins ausgebildet und weist einen Energie-Speicher in Form eines hier nicht sichtbaren Federelements und eine im Federbein integrierte Dämpfung auf. Das Federelement kann z.B: eine Spiralfeder oder andere Feder sein. Diese befinden sich zwischen den beiden Endstücken 22 zur Verbindung der Antriebseinrichtung 8 mit den Kopplungsstücken 20. Die Längsachse der Antriebseinrichtung verläuft parallel zu den Längsachsen der Greifelemente 10, 12, der Gestellplatten 26, 26 und der Kopplungsstücke 20. Der Abstand zwischen der Lagerung der Antriebseinrichtung 8 und der Antriebswellen 44, 46 auf den Kopplungsstücken 20 resultiert ein Hebel für einen Drehmoment aus der Federkraft des Federelements. Die Übertragung dieses Drehmoments von den Kopplungsstücken 20, über die Antriebswelle 44, 46, Hebelelemente 8 auf die Greifelemente sorgt für die Relativbewegung der Greifelemente zueinander. In einer koaxialen Anordnung der Längsachsen der Kopplungsstücke 20 und der Antriebseinrichtung befinden sich die Antriebswellen 44, 46 im Wesentlichen in einer drehmomentfreien Stellung (auch Totpunkt genannt).

Eine zweite Antriebseinrichtung 24 in Form einer Rollringmutter ist in Figur 3 als ein Kasten mit einer Durchgangbohrung dargestellt und befindet sich im mittleren Bereich der Gestellplatten 26, 28 zwischen den Antriebswellen. Die zweite Antriebseinrichtung ist mit einer Führungsschiene 2 verbunden, dessen Achse parallel zu der Längsachse der Greifelemente 10, 12 ausgerichtet ist. Die Rollringmutter sitzt auf beiden Gestellplatten auf und ist mit diesen fest verbunden und sorgt für die lineare Bewegung der Darmgreifvorrichtung 1 entlang der Führungsschiene 2.

Zum Schließen der Greifelemente 10, 12 wird die Darmgreifvorrichtung 1 mittels der zweiten Antriebseinrichtung 24 gegen einen zweiten Anschlag 54 verfahren, der in Form eines Wandabschnittes des Vorsatzgeräts 110 ausgebildet ist, wie in den Figuren 6a-d gezeigt. In der vollständig geöffneten Position befindet sich das zweite Hebelelement 16 direkt am dritten Anschlag 54. In dieser Position ist erreicht der Zwischenraum Z der Greifelemente 10, 12 das größte Ausmaß. Beim Kontakt mit dem zweiten Anschlag 54 erfährt das erste Greifelement 10 eine Kraft in zur Verfahrrichtung entgegengesetzter Richtung. Es folgt daraus ein Moment A, das insbesondere zum Überfahren der drehmomentfreien Stellung notwendig ist. Ist diese Stellung überfahren, genügt allein das Drehmoment B, das aus der Federkraft der ersten Antriebseinrichtung 8 resultiert. Die Schließbewegung der Greifelemente 10, 12 ist abgeschlossen, sobald die Abmessung des Zwischenraums Z den Durchmesser der zu greifenden Darmraupe erreicht hat.

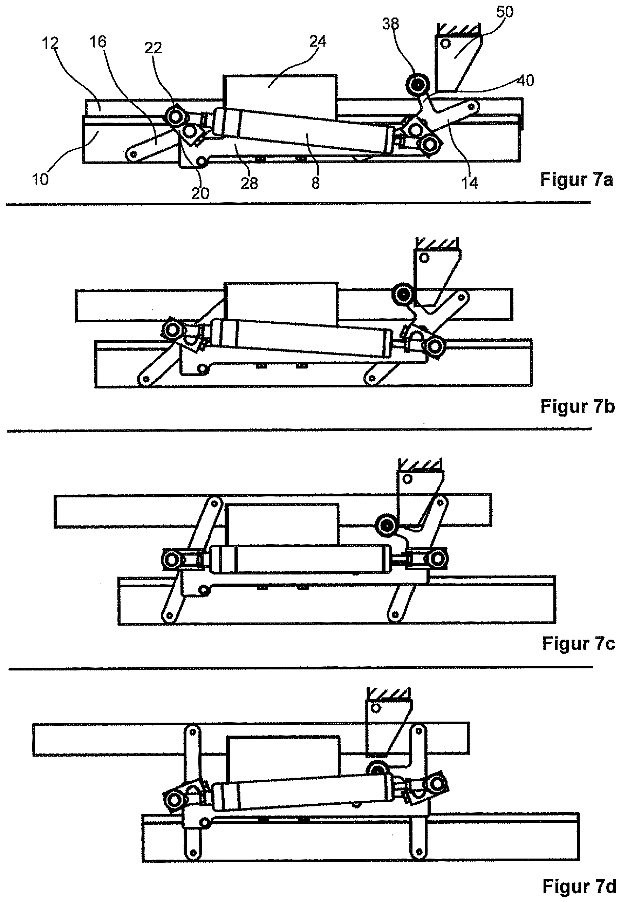

Zum Öffnen der Greifelemente 10, 12 verfährt die Darmgreifvorrichtung 1 an den ersten Anschlag 50, wie in den Figuren 7a-d gezeigt. Der Anschlag 50 ist so angeordnet, dass das Betätigungselement 38 beim Verfahren der Darmgreifvorrichtung 1 an dem ersten Anschlag 50 anschlägt. Der Anschlag 50 ist drehbar gelagert, so dass er nur in einer Verfahrrichtung der Darmgreifvorrichtung 1 mit dem Betätigungselement 38 zusammenwirkt, und zwar beim Auftreffen des Betätigungselements 38 auf die vertikale Kante des Anschlags 50. Andernfalls führt der Kontakt zwischen dem Betätigungselement 38 und dem ersten Anschlag 50 zu einer Verdrehung des Anschlags 50. Beim Kontakt des Betätigungselements 38 mit dem ersten Anschlag 50 auf deren vertikalen Kante wirkt die Länge des Arms 40 als einen Drehmomenthebel für eine Druckkraft, die aus dem relativen Verfahren der Darmgreifvorrichtung 1 zum Anschlag 50 resultiert. Das Drehmoment wirkt auf das Hebelelement 14, solange das Betätigungselement am ersten Anschlag 50 anliegt und die Darmgreifvorrichtung 1 relativ zum Anschlag 50 verfahren wird und wird kurz vor Erreichen der vollständig geöffneten Stellung der Greifelemente 10, 12 aufgehoben.

Die Bestückung des Füllrohrs 108 erfolgt durch die folgenden Schritte: In der geöffneten Position der Greifelemente 10, 12 wird die Darmgreifvorrichtung benachbart zu der Magazinvorrichtung 114 verfahren. Die Darmraupe rollt aus der Magazinvorrichtung auf die Innenfläche des ersten Greifelements 10 und wird aufgrund der prismatischen Form automatisch mittig zum Greifelement 10 positioniert. Zum Aufnehmen der Darmraupe wird das erste Greifelement zur Magazinvorrichtung hin verschwenkt, so dass sich der Abstand zwischen der Magazinvorrichtung und dem erweiterten Seitenwandabschnitt 32 minimiert wird. Sobald die Darmraupe sich zwischen den Greifelementen 10, 12 befindet, wird die Darmgreifvorrichtung 1 gegen den zweiten Anschlag 52 verfahren und geschlossen. Unabhängig vom Durchmesser der Darmraupe (Kaliber) greifen die Greifelemente 10, 12 die Darmraupe in einer Weise, dass die Darmraupe konzentrisch zu Mittelachse des Zwischenraums Z der Greifelemente 10, 12 ausgerichtet zwischen den Greifelementen liegt. Im geschlossenen Zustand der Gereifelemente 10, 12 verfährt die Darmgreifvorrichtung mit der Darmraupe entlang der Führungsschiene der gegenüberliegenden Kopfplatte 116 und schwenkt nach unten ein, so dass die Mittelachse des Zwischenraums der Greifelemente 10, 12 konzentrisch zum Füllrohr 108 ausgerichtet ist. Die Darmgreifvorrichtung 1 verfährt in Richtung des Füllrohrs 108 und zieht / schiebt die Darmraupe auf das Füllrohr 108. Die Haftkraft der Darmraupe an den Greifelementen ist dabei höher, als die Gleitreibungskraft zwischen der Darmraupe und dem Füllrohr 108.

Alternativ ist eines der Greifelemente 10, 12 mit mindestens einem zusätzlichen Anschlag zum anschieben der Darmraupe versehbar. Dieser Anschlag wäre im Wesentlichen senkrecht zur Längsachse des Greifelements, vorzugsweise an der Innenseite des Greifelements 10, 12 angeordnet. Beim Überziehen der Darmraupe auf das Füllrohr 108 würde ein solcher Anschlag neben der Haftkraft eine zusätzliche axiale Kraft auf die Darmraupe ausüben.

Während des Überziehvorgangs passiert die Darmgreifvorrichtung den ersten Anschlag 50 und öffnet ihre Greifelemente 10, 12, so dass die Darmraupe freigegeben wird. Anschließend fährt die Darmgreifvorrichtung 1 wieder zurück in Richtung der gegenüberliegenden Kopfplatte 116 und wird mittels Verschwenkung der Führungsschienen 2, 4 wieder in die Stellung zum Aufnehmen einer neuen Darmraupe gebracht.

Die Erfindung beschränkt sich nicht auf das hier beschriebene Ausführungsbeispiel und kann auch mittels abweichender Ausführungsvarianten ausgeführt werden, ohne dabei vom Gegenstand der beigefügten Anspüche abzuweichen.

## Patentansprüche

1. Darmgreifvorrichtung (1), insbesondere für geraffte Darmraupen zum Einsatz mit einer Wurstfüllmaschine, enthaltend:
- zwei relativ zueinander bewegbare Greifelemente (10, 12), die durch Verkleinern des Zwischenraums (Z) zwischen den Greifelementen (10, 12) die Darmraupe greifen und durch Vergrößern des Zwischenraums (Z) die Darmraupe freigeben,
- eine Antriebseinrichtung (8) zum Bewegen mindestens eines der Greifelemente (10, 12), und
- mindestens ein Hebelelement (14, 16) zum Koppeln des Antriebselements (8) mit mindestens einem Greifelement (10, 12),
**dadurch gekennzeichnet, dass** das Greifelement (10, 12) beweglich an dem Hebelelement (14, 16) gelagert ist, wobei mindestens ein Hebelelement (14, 16) mit beiden Greifelementen (10, 12) gekoppelt ist.

2. Vorrichtung (1) nach Anspruch 1,
**dadurch gekennzeichnet, dass** die Greifelemente (10, 12) drehbar an mindestens einem Hebelelement (14, 16) gelagert sind.

3. Vorrichtung (1) nach einem der vorstehenden Ansprüche,
**dadurch gekennzeichnet, dass** zwei Hebelelemente (14, 16) parallel zueinander angeordnet und in einer Ebene durch beide Hebelelemente (14, 16) auf gleicher Höhe gelagert sind.

4. Vorrichtung (1) nach einem der vorstehenden Ansprüche,
**dadurch gekennzeichnet, dass** die Hebelelemente (14, 16) mittels Antriebswellen (44, 46) an einem Gestell (24, 26) drehbar gelagert sind.

5. Vorrichtung (1) nach Anspruch 4,
**dadurch gekennzeichnet, dass** die Antriebseinrichtung (8) zwei Enden (22) aufweist, welche jeweils mittels eines Kopplungsstücks (20) an einer der Antriebswellen (44, 46) beabstandet von deren Längsachse drehbar gekoppelt ist.

6. Vorrichtung (1) nach einem der vorstehenden Ansprüche,
**dadurch gekennzeichnet, dass** das Antriebseinrichtung (8) einen Energiespeicher aufweist.

7. Vorrichtung (1) nach Anspruch 6,
**dadurch gekennzeichnet, dass** der Energiespeicher aus einem Federelement besteht.

8. Vorrichtung (1) nach einem der vorstehenden Ansprüche,
**dadurch gekennzeichnet, dass** die Greifelemente (10, 12) mittels jeweils eines aus der Federkraft des Federelements resultierenden auf die Antriebswellen (44, 46) wirkenden Drehmoments angetrieben werden.

9. Vorrichtung (1) nach einem der Ansprüche 5-8,
**dadurch gekennzeichnet, dass** die Antriebswelle (44, 46) in einer koaxialen Anordnung der Längsachsen der Kopplungsstücke (20) und des Antriebselements (8) im Wesentlichen drehmomentenfrei ist.

10. Vorrichtung (1) nach einem der vorstehenden Ansprüche ,
**dadurch gekennzeichnet, dass** die Antriebseinrichtung (8) mit einem Dämpferelement, insbesondere einem Federbein versehen ist.

11. Vorrichtung (1) nach einem der vorstehenden Ansprüche,
**dadurch gekennzeichnet, dass** durch die Gestaltung der Innenseiten der Greifelemente (10, 12) zwischen diesen eine prismatische oder prismenähnliche Struktur ausgebildet ist, und dass optional die Aussparung (34) der Greifelemente (10, 12) mit einer zusätzlichen Haftschicht (36) versehen sind.

12. Vorrichtung (1) nach einem der vorstehenden Ansprüche,
**dadurch gekennzeichnet, dass** ein erstes Greifelement (10) zum Auffangen einer aus einem Magazin (114) fallenden oder rollenden Darmraupe ausgebildet ist.

13. Vorrichtung (1) nach einem der vorstehenden Ansprüche,
ferner aufweisend eine Führungseinrichtung (24) zum Führen der Darmgreifvorrichtung (1) entlang einer Bewegungsbahn (2, 4),
wobei mindestens ein Anschlag (50) benachbart zu der Bewegungsbahn (2, 4) angeordnet ist, mittels dessen die Relativbewegung der Greifelemente (10, 12) zur Vergrößerung und Verkleinerung des Zwischenraums (Z) zwischen den Gleitelementen (10, 12) auslösbar ist.

14. Vorrichtung (1) nach Anspruch 13,
**dadurch gekennzeichnet, dass** die Hebelelemente (14, 16) mittels Antriebswellen (44, 46) an einem Gestell (24, 26) drehbar gelagert sind und das Gestell (24, 26) mit einer zweiten Antriebseinrichtung (24, 112) verbunden ist, mittels dessen die Darmgreifvorrichtung (1) entlang der Bewegungsbahn (2, 4) verfahrbar ist.

15. Vorrichtung (1) nach einem der Ansprüche 13 oder 14,
**dadurch gekennzeichnet, dass** die Darmgreifvorrichtung (1) um eine zur Bewegungsbahn (2, 4) parallele Achse verschwenkbar gelagert ist.

16. Vorrichtung (1) nach einem der Ansprüche 13-15,
**dadurch gekennzeichnet, dass** eines der Hebelelemente (14) ein mit einem ersten Anschlag (50) in Kontakt bringbares Betätigungselement (38) aufweist, welches beim Verfahren der Darmgreifvorrichtung (1) von dem ersten Anschlag (50) betätigt wird, so dass sich die Greifelemente (10, 12) auseinander bewegen und der Zwischenraums (Z) zwischen den Greifelementen (10, 12) vergrößert wird.

17. Vorrichtung (1) nach einem der Ansprüche 13-16,
**dadurch gekennzeichnet, dass** ein Abschnitt eines der Greifelemente (10, 12) beim Verfahren der Darmgreifvorrichtung (1) mit einem zweiten Anschlag (52) zusammenwirkt, so dass die Greifelemente sich zueinander bewegen und der Zwischenraum (Z) zwischen den Greifelementen (10, 12) verkleinert wird.

18. Vorrichtung (1) nach einem der Ansprüche 13-17,
**dadurch gekennzeichnet, dass** das Betätigungselement (38) an einem an dem Hebelelement (14) befestigten Arm angeordnet ist, welcher in Richtung der Antriebswelle (44, 46) versetzt ist und von einem stoßfestem Material umrandet ist.

19. Vorrichtung (1) nach Anspruch 17,
**dadurch gekennzeichnet, dass** der erste Anschlag (50) nur in einer Verfahrrichtung der Darmgreifvorrichtung (1) mit dem Betätigungselement (38) zusammenwirkt.

20. Vorrichtung (1) nach einem der Ansprüche 17-19,
**dadurch gekennzeichnet, dass** der zweite Anschlag (52) aus einem Wandabschnitt besteht, an dem die Darmgreifvorrichtung (1) montiert ist.

21. Vorrichtung (1) nach Anspruch 17,
**dadurch gekennzeichnet, dass** ein dritter Anschlag (54) an dem Gestell (24, 26) angebracht ist und mit dem zweiten Hebelelement (16) zusammenwirkt, um die Drehbewegung des zweiten Hebelelements (16) so zu begrenzen, dass sich die Greifelemente (10, 12) nur bis zu einem definierten Abstand voneinander auseinander bewegen.

22. Vorrichtung (1) nach einem der Ansprüche 14-21,
**dadurch gekennzeichnet, dass** die zweite Antriebseinrichtung (24, 112) ein Rollringgetriebe, eine Gewindespindel, einen Pneumatikzylinder, einen Linearmotor oder einen linearen Zahnriemen- oder Kettenführung enthält.

## Claims

1. A sausage casing gripping apparatus (1), in particular for gathered concertinaed sausage casings for use with a sausage filling machine, including:
- two gripping elements (10, 12) which are movable relative to each other and which grip the concertinaed sausage casing by a reduction in the intermediate space (Z) between the gripping elements (10, 12) and release the concertinaed sausage casing by an increase in the size of the intermediate space (Z),
- a drive device (8) for moving at least one of the gripping elements (10, 12) and
- at least one lever element (14, 16) for coupling the drive element (8) to at least one gripping element (10, 12),
**characterised in that** the gripping element (10, 12) is mounted movably on the lever element (14, 16), wherein at least one lever element (14, 16) is connected to both gripping elements (10, 12).

2. Apparatus (1) according to claim 1 **characterised in that** the gripping elements (10, 12) are mounted rotatably to at least one lever element (14, 16).

3. Apparatus (1) according to one of the preceding claims **characterised in that** two lever elements (14, 16) are arranged in mutually parallel relationship and are mounted in one plane through both lever elements (14, 16) at the same height.

4. Apparatus (1) according to one of the preceding claims **characterised in that** the lever elements (14, 16) are mounted on a support (24, 26) rotatably by means of drive shafts (44, 46).

5. Apparatus (1) according to claim 4 **characterised in that** the drive device (8) has two ends (22) which are respectively rotatably coupled by means of a coupling portion (20) to one of the drive shafts (44, 46) spaced from the longitudinal axis thereof.

6. Apparatus (1) according to one of the preceding claims **characterised in that** the drive device (8) has an energy storage means.

7. Apparatus (1) according to claim 6 **characterised in that** the energy storage means comprises a spring element.

8. Apparatus (1) according to one of the preceding claims **characterised in that** the gripping elements (10, 12) are driven by means of a respective torque resulting from the spring force of the spring element and acting on the drive shafts (44, 46).

9. Apparatus (1) according to one of claims 5 to 8 **characterised in that** the drive shaft (44, 46) is substantially torque-free in a coaxial arrangement of the longitudinal axes of the coupling portions (20) and the drive element (8).

10. Apparatus (1) according to one of the preceding claims **characterised in that** the drive device (8) is provided with a damper element, in particular a spring leg.

11. Apparatus (1) according to one of the preceding claims **characterised in that** by virtue of the configuration of the insides of the gripping elements (10, 12) a prismatic or prism-like structure is formed therebetween and optionally the recess (34) of the gripping elements (10, 12) is provided with an additional adhesion layer (36).

12. Apparatus (1) according to one of the preceding claims **characterised in that** a first gripping element (10) is adapted to catch a concertinaed sausage casing which rolls or falls out of a magazine (114).

13. Apparatus (1) according to one of the preceding claims and further having a guide device (24) for guiding the sausage casing gripping apparatus along a path of movement (2, 4), wherein at least one abutment (50) is arranged adjacent to the path of movement (2, 4), by means of which abutment the relative movement of the gripping elements (10, 12) for increasing and reducing the intermediate space (Z) between the gripping elements (10, 12) can be triggered.

14. Apparatus (1) according to claim 13 **characterised in that** the lever elements (14, 16) are mounted to a support (24, 26) rotatably by means of drive shafts (44, 46) and the support (24, 26) is connected to a second drive device (24, 112), by means of which the sausage casing gripping apparatus (1) is displaceable along the path of movement (2, 4).

15. Apparatus (1) according to one of claims 13 and 14 **characterised in that** the sausage casing gripping apparatus (1) is mounted pivotably about an axis parallel to the path of movement (2, 4).

16. Apparatus (1) according to one of claims 13 to 15 **characterised in that** one of the lever elements (14) has an actuating element (38) which can be brought into contact with a first abutment (50) and which is actuated upon displacement of the sausage casing gripping apparatus (1) by the first abutment (50) so that the gripping elements (10, 12) move away from each other and the intermediate space (Z) between the gripping elements (10, 12) is increased in size.

17. Apparatus (1) according to one of claims 13 to 16 **characterised in that** a portion of one of the gripping elements (10, 12) cooperates with a second abutment (52) in the displacement of the sausage casing gripping apparatus (1) so that the gripping elements move towards each other and the intermediate space (Z) between the gripping elements (10, 12) is reduced in size.

18. Apparatus (1) according to one of claims 13 to 17 **characterised in that** the actuating element (38) is arranged on an arm which is fixed to the lever element (14) and which is displaced in the direction of the drive shaft (44, 46) and which is edged by an impact-resistant material.

19. Apparatus (1) according to claim 17 **characterised in that** the first abutment (50) cooperates with the actuating element (38) only in one direction of travel of the sausage casing gripping apparatus (1).

20. Apparatus (1) according to one of claims 17 to 19 **characterised in that** the second abutment (52) comprises a wall portion, to which the sausage casing gripping apparatus (1) is mounted.

21. Apparatus (1) according to claim 17 **characterised in that** a third abutment (54) is mounted to the support (24, 26) and cooperates with the second lever element (16) to limit the rotary movement of the second lever element (16) so that the gripping elements (10, 12) move away from each other only as far as a defined spacing.

22. Apparatus (1) according to one of claims 14 to 21 **characterised in that** the second drive device (24, 112) includes a rolling ring transmission, a screwthreaded spindle, a pneumatic cylinder, a linear motor or a linear toothed belt or chain guide.

## Revendications

1. Dispositif (1) de préhension de boyau, en particulier pour des boyaux froncés en forme de chenille destinés à être utilisés avec une machine de remplissage de saucisses, contenant :
- deux éléments de préhension (10, 12) pouvant être déplacés l'un par rapport à l'autre, qui saisissent le boyau en forme de chenille en réduisant l'espace intermédiaire (Z) entre les éléments de préhension (10, 12) et libèrent le boyau en forme de chenille en agrandissant l'espace intermédiaire (Z) ;
- un système d'entraînement (8) servant à déplacer au moins un des éléments de préhension (10, 12) ; et
- au moins un élément de levier (14, 16) servant à coupler l'élément d'entraînement (8) à au moins un élément de préhension (10, 12),
**caractérisé en ce que** l'élément de préhension (10, 12) est monté de manière mobile au niveau de l'élément de levier (14, 16), dans lequel au moins un élément de levier (14, 16) est couplé aux deux éléments de préhension (10, 12).

2. Dispositif (1) selon la revendication 1,
**caractérisé en ce que** les éléments de préhension (10, 12) sont montés de manière à pouvoir tourner au niveau d'au moins un élément de levier (14, 16).

3. Dispositif (1) selon l'une quelconque des revendications précédentes,
**caractérisé en ce que** deux éléments de levier (14, 16) sont disposés de manière parallèle l'un par rapport à l'autre et sont montés à une hauteur identique dans un plan par deux éléments de levier (14, 16).

4. Dispositif (1) selon l'une quelconque des revendications précédentes,
**caractérisé en ce que** les éléments de levier (14, 16) sont montés de manière à pouvoir tourner au moyen d'arbres d'entraînement (44, 46) au niveau d'un châssis (24, 26).

5. Dispositif (1) selon la revendication 4,
**caractérisé en ce que** le système d'entraînement (8) présente deux extrémités (22), qui sont couplées respectivement de manière à pouvoir tourner, au moyen d'une pièce de couplage (20), au niveau d'un des arbres d'entraînement (44, 46), en étant espacées de l'axe longitudinal de ces derniers.

6. Dispositif (1) selon l'une quelconque des revendications précédentes,
**caractérisé en ce que** le système d'entraînement (8) présente un accumulateur d'énergie.

7. Dispositif (1) selon la revendication 6,
**caractérisé en ce que** l'accumulateur d'énergie est constitué d'un élément de ressort.

8. Dispositif (1) selon l'une quelconque des revendications précédentes,
**caractérisé en ce que** les éléments de préhension (10, 12) sont entraînés au moyen respectivement d'un couple de rotation résultant de l'élasticité de l'élément de ressort et agissant sur les arbres d'entraînement (44, 46).

9. Dispositif (1) selon l'une quelconque des revendications 5 - 8,
**caractérisé en ce que** l'arbre d'entraînement (44, 46) est sensiblement sans couple de rotation dans un agencement coaxial des axes longitudinaux des pièces de couplage (20) et de l'élément d'entraînement (8).

10. Dispositif (1) selon l'une quelconque des revendications précédentes,
**caractérisé en ce que** le système d'entraînement (8) est pourvu d'un élément amortisseur, en particulier d'une jambe de force.

11. Dispositif (1) selon l'une quelconque des revendications précédentes,
**caractérisé en ce qu'**est réalisé, du fait de la configuration des côtés intérieurs des éléments de préhension (10, 12), entre ces derniers, une structure prismatique ou similaire à un prisme, et qu'en option l'évidement (34) des éléments de préhension (10, 12) est pourvu d'une couche adhésive (36) supplémentaire.

12. Dispositif (1) selon l'une quelconque des revendications précédentes,
**caractérisé en ce qu'**un premier élément de préhension (10) est réalisé afin de réceptionner un boyau en forme de chenille tombant ou roulant depuis un magasin (114).

13. Dispositif (1) selon l'une quelconque des revendications précédentes,
présentant en outre un système de guidage (24) servant à guider le dispositif (1) de préhension de boyau le long d'une voie de déplacement (2, 4),
dans lequel au moins une butée (50) est disposée de manière adjacente à la voie de déplacement (2, 4), au moyen de laquelle le déplacement relatif des éléments de préhension (10, 12) peut être déclenché afin d'agrandir et de réduire l'espace intermédiaire (Z) entre les éléments de préhension (10, 12).

14. Dispositif (1) selon la revendication 13,
**caractérisé en ce que** les éléments de levier (14, 16) sont montés de manière à pouvoir tourner au niveau d'un châssis (24, 26) au moyen d'arbres d'entraînement (44, 46), et le châssis (24, 26) est relié à un deuxième système d'entraînement (24, 112), au moyen duquel le dispositif (1) de préhension de boyau peut être déplacé le long de la voie de déplacement (2, 4).

15. Dispositif (1) selon l'une quelconque des revendications 13 ou 14,
**caractérisé en ce que** le dispositif (1) de préhension de boyau est monté de manière à pouvoir pivoter autour d'un axe parallèle par rapport à la voie de déplacement (2, 4).

16. Dispositif (1) selon l'une quelconque des revendications 13 - 15,
**caractérisé en ce qu'**un des éléments de levier (14) présente un élément d'actionnement (38) pouvant être amené en contact avec une première butée (50), lequel élément d'actionnement est actionné par la première butée (50) lors du déplacement du dispositif (1) de préhension de boyau de sorte que les éléments de préhension (10, 12) se déplacent en s'écartant les uns des autres et l'espace intermédiaire (Z) entre les éléments de préhension (10, 12) est agrandi.

17. Dispositif (1) selon l'une quelconque des revendications 13 - 16,
**caractérisé en ce qu'**une section d'un des éléments de préhension (10, 12) coopère, lors du déplacement du dispositif (1) de préhension de boyau, avec une deuxième butée (52), de sorte que les éléments de préhension se déplacent en se rapprochant les uns des autres et l'espace intermédiaire (Z) entre les éléments de préhension (10, 12) est réduit.

18. Dispositif (1) selon l'une quelconque des revendications 13 - 17,
**caractérisé en ce que** l'élément d'actionnement (38) est disposé au niveau d'un bras fixé au niveau de l'élément de levier (14), lequel bras est décalé en direction de l'arbre d'entraînement (44, 46) et est encadré par un matériau résistant aux chocs.

19. Dispositif (1) selon la revendication 17,
**caractérisé en ce que** la première butée (50) coopère seulement dans une direction de déplacement du dispositif (1) de préhension de boyau avec l'élément d'actionnement (38).

20. Dispositif (1) selon l'une quelconque des revendications 17 - 19,
**caractérisé en ce que** la deuxième butée (52) est constituée d'une section de paroi, au niveau de laquelle est monté le dispositif (1) de préhension de boyau.

21. Dispositif (1) selon la revendication 17,
**caractérisé en ce qu'**une troisième butée (54) est installée au niveau du châssis (24, 26) et coopère avec le deuxième élément de levier (16) afin de délimiter le déplacement en rotation du deuxième élément de levier (16) de telle manière que les éléments de préhension (10, 12) se déplacent en s'écartant les uns des autres seulement jusqu'à un espacement défini.

22. Dispositif (1) selon l'une quelconque des revendications 14 - 21,
**caractérisé en ce que** le deuxième système d'entraînement (24, 112) contient un engrenage à bague de roulement, une broche filetée, un vérin pneumatique, un moteur linéaire ou un guide de courroie dentée ou de chaîne linéaire.
